# FASCICULE DE BREVET EUROPEEN

(11) **EP 0 380 387 B1**
(45) Date de publication et mention de la délivrance du brevet: **18.01.1995**
(21) Numéro de dépôt: 90400122.9
(22) Date de dépôt: 17.01.1990
(51) Int. Cl.: B08B 7/00, B23K 26/14, E04G 23/00

(54) **Nettoyage d'une surface avec un laser**
Oberflächenreinigung mit einem Laser
Surface cleaning with a laser

(30) Priorité: 17.01.1989 FR 8900496
(43) Date de publication de la demande: 01.08.1990
(73) Titulaire: AGENCE REGIONALE DE DEVELOPPEMENTS TECHNOLOGIQUES - ARDT -, F-21000 Dijon (FR)
(72) Inventeur: Boquillon, Jean-Pierre, F-21000 Dijon (FR); Bresson, Philippe, F-21000 Dijon (FR); Berger, Hubert, F-21850 Saint Apollinaire (FR)
(74) Mandataire: Bruder, Michel

(56) Documents cités:
- EP-A- 0 078 941
- EP-A- 0 233 755
- WO-A-83/01400
- DE-A- 2 145 921
- FR-A- 2 285 734
- FR-A- 2 300 632
- US-A- 4 587 035
- US-A- 4 756 765

## Description

L'invention concerne un procédé de nettoyage de la surface de matériaux, tels que particulièrement de la pierre, du verre, de l'acier, de la céramique, du bois, du papier ou du carton, à l'exception des matières plastiques et un dispositif de mise en oeuvre de ce procédé, utilisant un laser impulsionnel à impulsions courtes, dont on focalise le faisceau sur la surface à nettoyer.

On connait à ce jour plusieurs procédés de nettoyage de la surface d'objets ou d'édifices ayant été pollués, soit en raison de leur usage dans un environnement salissant ou agressif, soit au cours de leur fabrication dans un contexte industriel.

Pour ce qui concerne le premier cas, qui recouvre de manière non exhaustive le rajeunissement de l'état de surface des monuments, des objets d'art du type des verres, des céramiques, ou encore de pièces métalliques du type de monnaies, de bronze, d'armes et autres antiquités, il est connu d'utiliser des moyens mécaniques - tels que notamment la projection de silice pulvérulente pour le nettoyage de pierre, ou l'utilisation de fraises de précision pour la désincrustation de concrétions sur de petits objets - ou des moyens chimiques, tels que par exemple des acides. Or, ces techniques nécessitent une mise en oeuvre délicate et longue peu adaptée à un rendement économique convenable, sans pour autant garantir un nettoyage parfait de toute la saleté déposée. Un procédé plus récent, développé en laboratoire, utilise un laser de puissance impulsionnel YAG, fonctionnant en mode relaxé, les impulsions obtenues variant ainsi de 0,1 millisecondes à environ 10 millisecondes.

Un tel procédé est une illustration du procédé décrit dans le brevet US-4 756 765 qui concerne l'enlèvement de la surface d'un substrat de matériaux polluants présentant une faible conduction thermique, tels des peintures, de la graisse ou des céramiques ; cet enlévement résulte d'un effet thermique, et nécessite, pour ce faire, que le faisceau laser dirigé sur la surface à décaper présente une forte énergie, et une durée d'impulsion typiquement supérieure à 3 microsecondes, de manière à ce que, après focalisation, la densité d'énergie (ou fluence) soit comprise entre 2 J/cm² et 100 J/cm². Ce dernier procédé, même s'il s'inscrit davantage dans un objectif industriel que dans le simple nettoyage d'objets ou d'édifices pollués, met en oeuvre les mêmes phénomènes physiques. On retrouve ainsi des conditions sensiblement identiques de fonctionnement d'un laser dans la demande internationale WO-83/01400, qui décrit un procédé plus particulièrement destiné au nettoyage de la coque de navires ; la fluence atteint une valeur proche de 20 J/cm², le laser utilisé pouvant typiquement être un laser CO₂ ou un laser YAG. A plus basse énergie, il a été proposé de supprimer la couche superficielle de rouille présente sur les surfaces métalliques, ce procédé faisant l'objet de la demande de brevet française FR-2 467 656 ; le laser utilisé est un laser CO₂, focalisé sur la surface à nettoyer de manière à ce que la fluence atteigne environ 5 J/cm². Par ce procédé, on transforme la rouille en magnétite ; mais cette couche étant très adhérente à la superficie du métal traité, elle doit ensuite être retirée par des moyens conventionnels, mécaniques ou chimiques. On retrouve le même inconvénient dans la demande de brevet française FR-2 300 632 ; le laser ne sert ici qu'à échauffer brusquement et intensément la pellicule superficielle d'oxydes présente à la surface d'objets métalliques, celle-ci étant finalement détachée du substrat métallique par une action mécanique, chimique, ou électrochimique.

On connait encore le brevet européen EP-A-233.755 qui préconise l'emploi d'une source laser pour la préparation de surfaces d'objets en plastique moulé. De tels objets présentent en effet sur leur surface externe après démoulage un film d'un agent de démoulage empèchant lesdits objets d'adhérer aux parois du moule lors de l'opération de démoulage. Un tel film doit être impérativement retiré car il rend quasiment impossible toute opération ultérieure de peinture ou de collage sur les objets en plastique. Le précédé décrit dans ce brevet a pour but principal d'enlever de la surface des objets en plastique moulé, un film contenant à la fois l'agent de démoulage et de la matière plastique constitutive de l'objet à préparer ; il s'agit d'une source utilisant un faisceau laser émettant dans l'ultra-violet du type à Excimères ou YAG quadruplé. S'il est certain qu'une telle source met en oeuvre des densités d'énergie bien inférieures à ce que l'on utilise généralement dans le nettoyage de matériau (inférieur à un joule/cm2) on sait bien que l'énergie des photons est dans ce cas suffisante pour casser les liaisons chimiques des matériaux de surface et les modifier. Appliquées à des matières organiques telles que par exemple de simples plastiques, on sait bien qu'un tel faisceau procure, pour l'essentiel, un effet photochimique aboutissant à un enlèvement de la matière plastique mélée à la couche d'agent de démoulage par simple évaporation ou décomposition.

Tous ces procédés présentent, par conséquent, des inconvénients liés à leur spécificité et ils ne constituent en aucun cas un moyen général et unique de nettoyage de matériaux, objets ou édifices, se situant dans un environnement polluant ou industriel. Par ailleurs, ces procédés restent des moyens agressifs dont il s'avère difficile de limiter l'action à la seule couche de saleté incrustée. Notamment, du fait que les spectres d'absorption des matériaux polluants ou sous-jacents qui sont traités peuvent être très larges ou, au contraire, très étroits, il peut se produire, dans bien des cas, une inadéquation de la longueur d'onde du faisceau laser utilisé par rapport au nettoyage recherché ; ce faisceau peut ainsi être absorbé non seulement par la couche superficielle polluante à éliminer, mais également par le matériau sous-jacent, d'où un risque d'endommagement de celui-ci par échauffement. En effet, la puissance moyenne déposée par le faisceau laser sur le matériau à nettoyer atteint des valeurs élevées lorsque, d'une part les impulsions laser sont longues, et d'autre part l'énergie des impulsions et leur fréquence sont trop élevées, ce qui est le cas dans les procédés de l'art antérieur. On peut enfin citer, dans un domaine d'application très spécifique, la demande de brevet française FR-2 525 380 ; dans ce document, il est établi qu'on peut décomtaminer des composants de centrales nucléaires présentant une couche d'oxydes radioactifs au moyen d'un laser impulsionnel d'intensité suffisante pour permettre une pénétration thermique correspondant à l'épaisseur de la couche d'oxydes, sans endommager le substrat métallique sous-jacent. Ce dernier procédé est sensiblement différent des procédés précédemment décrits, en ce sens que s'il préconise l'utilisation de densités d'énergie supérieures à 4 J/cm², normalement proches de 10 J/cm², les impulsions laser utilisées peuvent aussi être plus courtes. Ce procédé présente néanmoins l'inconvénient de mettre en oeuvre un effet thermique dont on a précédemment mentionné les risques vis à vis du matériau sous-jacent.

La présente invention vise à remédier à ces inconvénients, et propose une alternative à ces procédés de nettoyage utilisant l'effet de volatilisation des couches superficielles du matériau lorsque celui-ci est soumis à un rayonnement optique cohérent dont la densité, en puissance instantanée, est suffisante pour générer, à l'interface de la matière et du milieu extérieur, une onde de choc ayant pour effet de décoller au moins une partie de la couche superficielle polluante recouvrant ledit matériau.

Il convient donc ici de raisonner plus en terme de densité de puissance qu'en terme de densité d'énergie, ou fluence, du faisceau laser ; en effet, l'onde de choc visée par la présente invention est due à une interaction instantanée d'un faisceau de forte puissance avec la surface à nettoyer, c'est-à-dire qu'il s'agit d'une interaction brève avant d'être énergétique. C'est pourquoi, par exemple, une impulsion laser présentant un pic élevé suivi d'une décroissance plus lente convient tout à fait à la mise en oeuvre de l'invention, même si, par ailleurs, l'énergie déposée, que l'on calcule de la manière habituelle par intégration au cours du temps de la puissance instantanée, retrouve des valeurs comparables à celles décrites dans les brevets antérieurs déjà mentionnés. En l'espèce, l'onde de choc ne peut s'établir qu'en dehors de tout phénomène thermique d'absorption majoritaire, et il est clair qu'on doit alors éviter des impulsions laser longues et/ou trop énergétiques.

A cet égard, le procédé selon l'invention pour le nettoyage de la surface de tout matériau autre que le plastique, focalisant un faisceau laser impulsionnel de forte puissance instantannée sur ladite surface est caractérisé en ce que le laser utilisé à cet effet fournit des impulsions dont la longueur d'onde est comprise entre 500 et 1100 nanomètres, dont la durée est comprises entre quelques nanosecondes et quelques microsecondes, dont la puissance instantanée a une valeur comprise entre quelques centaines de kilowatts et quelques dizaines de mégawatts et qui est focalisé sur la surface à nettoyer de manière à ce que la densité de puissance par impulsion soit comprise entre quelques centaines de kilowatts par cm² et quelques dizaines de mégawatts par cm², de manière à générer, à l'interface du matériau, une onde de choc non thermique ayant pour effet de décoller au moins une partie de la couche superficielle polluante recouvrant ledit matériau.

Suivant une caractéristique complémentaire de l'invention, le laser fournit des impulsions dont la durée peut varier entre quelques nanosecondes et 3 microsecondes. Suivant une autre caractéristique, la longueur d'onde de la radiation émise par ce laser se situe à l'intérieur du spectre d'absorption du matériau polluant, formant une couche superficielle sur la surface du matériau à nettoyer.

Par ailleurs, comme le spectre d'absorption du matériau polluant est généralement différent du spectre d'absorption du matériau à nettoyer sous-jacent, au fur et à mesure que le nettoyage de la surface du matériau s'effectue, il apparait des couches superficielles moins polluées et donc généralement plus réfléchissantes vis à vis du rayonnement laser : les risques d'altération du matériau sous-jacent sont ainsi pratiquement inexistants. Cet effet se comprend particulièrement bien dans le cas où le matériau à nettoyer est de la pierre, du type du granit par exemple.

Le cas du décapage ou du décalaminage de matériaux notamment métalliques, et plus généralement de matériaux dont le spectre d'absorption recouvre en partie celui du matériau polluant, est identique, mais peut nécessiter, conformément à une caractéristique complémentaire de l'invention, l'utilisation d'un laser à fréquence d'émission variable ou accordable, dont la longueur d'onde d'émission peut être réglée continument ou discrètement au fur et à mesure du nettoyage, la plage de longueur d'onde nécessaire à cet effet étant fonction des deux spectres d'absorption. L'utilisation d'un tel laser rend également plus efficace le procédé conforme à l'invention lorsque le spectre d'absorption du matériau polluant est très étroit, le laser accordable permettant alors de volatiliser ce matériau dans les meilleures conditions. A l'inverse, on peut profiter d'une "fenêtre" de transparence du matériau sous-jacent à nettoyer vis à vis de certaines longueurs d'onde pouvant être émises par le laser accordable utilisé, ces longueurs d'onde étant par ailleurs absorbées par le matériau polluant ; dans ces conditions, le risque d'endommagement du matériau sous-jacent est nettement diminué.

L'utilisation d'impulsions laser de forte puissance instantanée constitue donc l'apport principal du procédé selon l'invention ; l'énergie de chaque impulsion étant ainsi fixée, on sait alors parfaitement que plus on diminue la durée desdites impulsions, plus on augmente leur "puissance crête". En focalisant cette puissance disponible sur la surface à nettoyer selon un diamètre de faisceau suffisamment faible, la densité de puissance disponible est de plus en plus importante.

La faible durée des impulsions permet de déposer sur le matériau à nettoyer une puissance moyenne seulement égale à quelques watts ou quelques dizaines de watts ; cette puissance est réglable si on dispose, par ailleurs, d'un moyen de contrôle de la fréquence de répétition des impulsions émises par le laser.

Cette faible puissance moyenne requise par le procédé conforme à la présente invention permet, en outre, de disposer d'un laser de faible encombrement et consommant peu d'énergie, même lorsque le rendement de fonctionnement de ce laser est faible. Ainsi pourra-t-on utiliser, de manière bien entendu non exhaustive, des lasers à milieu amplificateur solide, et notamment des lasers du type YAG dopé au néodyme, du type à saphir dopé au titane, et du type à alexandrite, des lasers à colorant, ou encore des lasers à excimères.

D'autres caractéristiques et avantages du procédé selon l'invention ressortiront mieux de la description qui va suivre d'un mode de mise en oeuvre non limitatif de ce procédé en référence au dessins annexés sur lesquels :
- la figure 1 est une vue générale d'un dispositif de mise en oeuvre du procédé selon l'invention, applicable par exemple au nettoyage des monuments historiques.
- la figure 2 est une vue en élévation de la pièce à main telle que décrite par la suite.
- la figure 3 est un schéma optique de principe du système optique de séparation du faisceau laser tel que décrit par la suite.

Conformément à une première forme de réalisation du procédé selon l'invention, il est utilisé un laser à milieu amplificateur solide du type cristal ou verre de grenat d'yttrium et d'aluminium YAG dopé au néodyme, fonctionnant en mode déclenché, et fournissant par conséquent des impulsions dont la durée peut varier entre un dizaine de nanosecondes et une trentaine de nanosecondes ; afin de se trouver dans les conditions de fonctionnement spécifiques au procédé de l'invention, l'énergie par impulsion est égale au maximum à environ 500 millijoules, et le diamètre moyen du faisceau issu dudit laser présente un diamètre inférieur à une dizaine de millimètres sur la surface à nettoyer.

Un tel laser a un encombrement réduit, de l'ordre du m³, ce qui est un avantage pour son transport, et son alimentation en énergie est constituée classiquement d'une armoire d'encombrement équivalent. La consommation s'établit à environ 4 kilowatts par heure dans les conditions précitées, et en choisissant une fréquence de répétition des impulsions égales à une trentaine de hertz. Ceci permet de relier le dispositif à un groupe électrogène transportable, notamment utilisable sur un chantier lors du nettoyage d'objets ou d'édifices se situant en milieu pollué, tels des statues, des monuments historiques, ou autres antiquités. Le nettoyage d'autres édifices plus courants est tout à fait envisageable, mais son intérêt économique reste à démontrer.

Le choix de la fréquence de fonctionnement du laser n'est pas très important mais il semble, d'après les études réalisées en laboratoire et sur le chantier, qu'une fréquence égale à quelques dizaines de hertz permette d'obtenir les meilleurs résultats : en effet, il semble que cette plage de fréquence convienne d'une façon satisfaisante à une mise en oeuvre particulière du procédé selon l'invention dont la description suivante fournit un exemple non limitatif pour ce qui concerne le nettoyage d'un édifice en milieu extérieur.

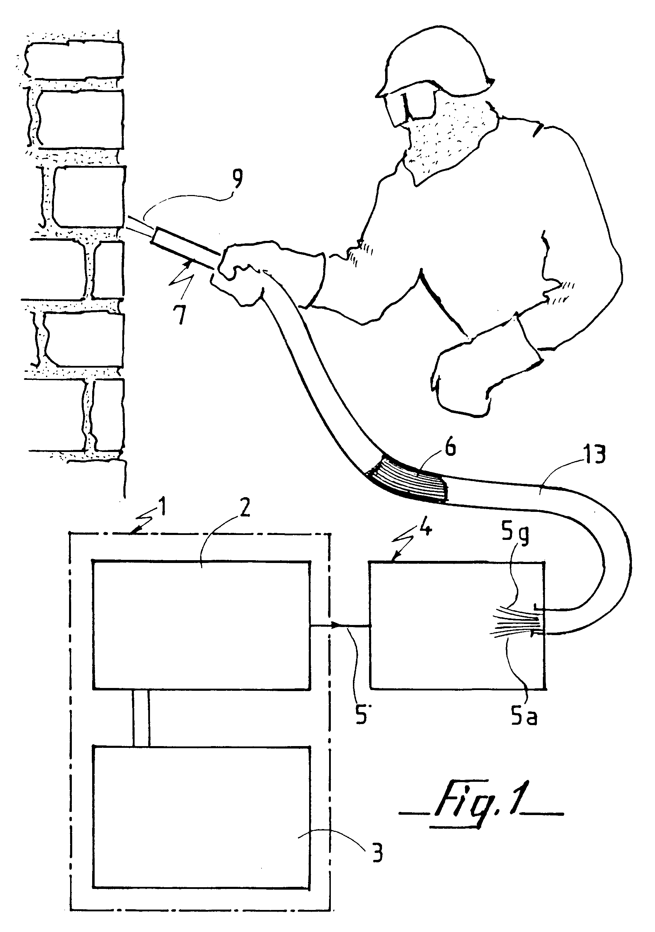

Ainsi, conformément à la figure 1, on choisit de confier à un opérateur le déplacement du lieu de focalisation du faisceau laser sur la surface à nettoyer, préférentiellement à un déplacement automatisé, du type balayage optique, qui aurait le désavantage de provoquer une série de défauts répétitifs, conséquences d'une hétérogénéité spatiale en énergie de la section du faisceau laser, même après sa focalisation sur la surface à nettoyer. On notera cependant qu'un déplacement automatisé est utile dans d'autres applications du procédé de l'invention, notamment dans un contexte industriel.

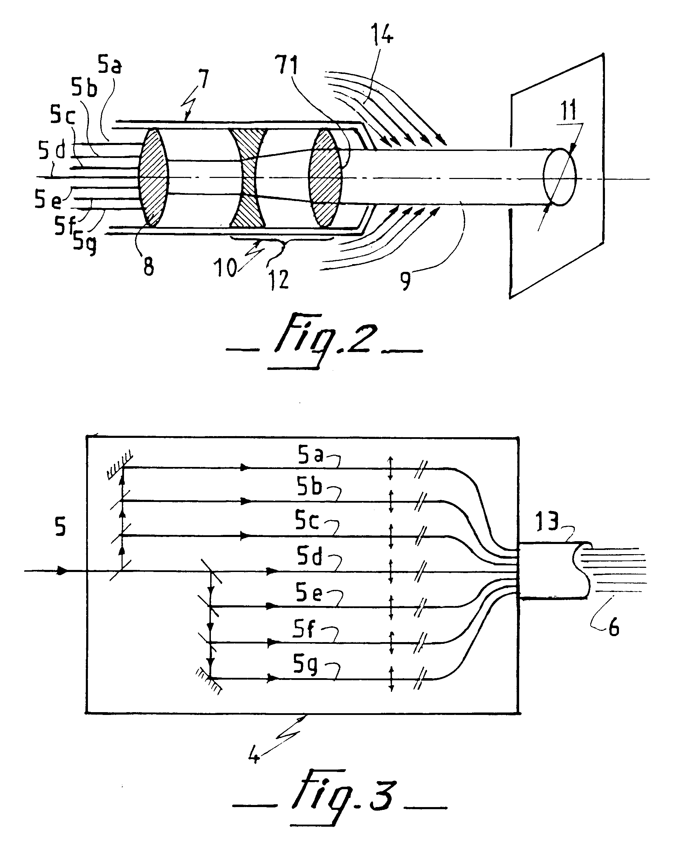

Le dispositif de mise en oeuvre du procédé selon l'invention, conformément aux figures 1, 2 et 3, est ainsi bien adapté à une utilisation manuelle, fiable et efficace, en ce qu'il comprend, d'une part, un ensemble mécanique 1 contenant le laser 2 et son alimentation électrique 3, d'autre part, un boîtier 4, placé sur le trajet du faisceau laser 5 issu dudit ensemble mécanique 1, et contenant un système optique destiné à séparer le faisceau laser 5 en plusieurs autres faisceaux laser 5a,5b,5c,5d,5e,5f et 5g d'énergies approximativement égales entre elles, lesdits faisceaux laser 5a,5b,5c,5d,5e,5f et 5g étant alors guidés, par un ensemble 6 de fibres optiques, vers une pièce à main 7 comprenant un moyen optique 8 de recombinaison des faisceaux laser 5a,5b,5c,5d,5e,5f et 5g en un faisceau laser unique 9, et un moyen optique 10 de réglage du diamètre 11 dudit faisceau laser 9 recombiné, ce deuxième moyen 10 étant par exemple constitué par un montage optique afocal 12, ladite pièce à main 7 ayant une taille adéquate pour être facilement manipulée par l'opérateur procédant au nettoyage de la surface à nettoyer.

L'efficacité de ce nettoyage est ainsi très élevée: dans des conditions courantes de nettoyage de monuments historiques en pierre, on a estimé pouvoir restaurer complètement une surface égale à un mètre carré en une heure, ce rendement étant à comparer au rendement actuel des procédés mécaniques de projection de silice pulvérulente égal, au maximum, à un mètre carré par jour.

Une caractéristique importante du dispositif mettant en oeuvre le procédé selon l'invention concerne le choix des fibres optiques 6 qui transmettent les faisceaux laser 5a,5b,5c,5d,5e,5f et 5g à la pièce à main 7. Ce choix est intimement lié au choix de la durée des impulsions laser transmises par ces fibres optiques 6 ; en effet, il existe un seuil maximum de transmission en "puissance crête" d'un faisceau laser pour chaque type de fibre. Ceci explique le rôle du système optique 6 de séparation du faisceau laser 5 en plusieurs autres faisceaux 5a,5b,5c,5d,5e,5f et 5g.

Préférentiellement, les fibres optiques utilisées pour guider les faisceaux laser 5a,5b,5c,5d,5e,5f et 5g vers la pièce à main 7 possèdent un coeur en silice et une gaine en silice ou en silicone dure. Ce choix semble être le seul possible dans les conditions actuelles de disponibilité des fibres optiques, du moins pour ce qui concerne le transport de faisceaux présentant une forte puissance crête.

On notera également qu'on choisit une longueur d'environ 30 mètres de fibres optiques, ce qui permet à l'opérateur de travailler à une distance suffisante des éléments fixes du dispositif mettant en oeuvre le procédé selon l'invention.

Il est enfin prévu une protection mécanique des fibres optiques au moyen d'une gaine externe 13 renforcée, ce qui permet d'utiliser le dispositif sur un chantier.

Par ailleurs, il est nécessaire de protéger le dispositif dans son intégralité contre la poussière résultant du nettoyage effectué par le laser : ainsi, à proximité de la surface à nettoyer, soit à environ une vingtaine de centimètres, la face optique 71 de sortie de la pièce à main 7 subit les agressions de la poussière provenant qui résulte de la pulvérisation de la couche superficielle de saleté se trouvant sur la pierre. On prévoit un dépoussiérage continu ou discontinu de cette face optique 71 en disposant, à l'intérieur ou à l'extérieur de la pièce à main 7, un dispositif procurant un jet 14 d'un fluide, tel qu'avantageusement de l'air. Un compresseur alimente ce dispositif, la liaison entre le compresseur et le dispositif procurant le jet 14 pouvant avantageusement être un tube protégé par la gaine 13 de renforcement des fibres 6.

En outre, le boitier 4 contenant le système optique de séparation du faisceau laser 5 en plusieurs faisceaux 5a, 5b, 5c, 5d, 5e, 5f, 5g est préférentiellement un boitier étanche dans lequel on réalise le vide : cette configuration permet de protéger efficacement les éléments optiques du système de séparation du faisceau contre la poussière. De plus, il permet d'éviter les claquages résultant de la focalisation du faisceau laser 5 sur des poussières, se trouvant à l'intérieur du boîtier 4, sur la trajet dudit faisceau laser 5.

On notera enfin le rôle du moyen optique de réglage 10, du diamètre 11 du faisceau laser 9 recombiné, qui se trouve dans le corps de la pièce à main 7. Ce moyen optique 10, constitué par exemple par un montage optique afocal 12, comprenant une lentille divergente et une lentille convergente, permet, à partir d'une même énergie du faisceau laser 9 disponible, d'obtenir une densité de "puissance crête" variable : l'opérateur a ainsi la possibilité de varier l'efficacité du nettoyage en fonction du niveau d'incrustation de saleté qu'il constate sur la surface à nettoyer : en augmentant le diamètre 11 par le biais du moyen optique 10, il fait directement varier cette efficacité du nettoyage.

Conformément à une deuxième forme de réalisation du procédé selon l'invention, il est utilisé un laser à colorant ou un laser à milieu amplificateur solide du type saphir dopé au titane ou du type alexandrite. De tels lasers sont des lasers à fréquence variable ou accordable. Typiquement, un laser à colorant émet ainsi dans le spectre visible, entre 500 et 720 nanomètres suivant le colorant utilisé. Les lasers à spahir dopé au titane émettent, quant à eux, sur une plage de longueur d'onde allant de 700 à 1100 nanomètres ; associé à un doubleur de fréquence, d'un type par exemple bien connu utilisant le phénomène de biréfringence optique induite dans un matériau par un champ électrique, il est alors possible de disposer d'une plage de longueur d'onde variable de 350 à 550 nanomètres. De cette façon, il est donc possible, après étude préalable des spectres d'absorption respectifs du matériau à nettoyer, et du matériau polluant formant une couche à sa superficie, de choisir et de régler la longueur d'onde d'émission du laser accordable utilisé de manière à se trouver dans des conditions optimales de nettoyage, c'est-à-dire associant la meilleure efficacité d'absorption du matériau polluant vis à vis du faisceau laser, sans se départir, néanmoins, d'une durée d'impulsion suffisament courte, apte à générer le phénomène d'onde de choc caractérisant le procédé de l'invention.

Ainsi, on peut utiliser un laser à colorant en mode relaxé, celui-ci émettant alors des impulsions de quelques microsecondes, ou en mode déclenché, les impulsions durant alors quelques nanosecondes. Par contre, dans le cas des lasers à milieu amplificateur solide d'un type déjà mentionné, les durées d'impulsions varient de 1 à 3 microsecondes en mode relaxé, et sont de quelques dizaines de nanosecondes en mode déclenché (durée comparable d'ailleurs à la durée d'une impulsion émise par un laser non accordable à milieu amplificateur solide du type YAG fonctionnant suivant le même mode).

L'utilisation d'un laser à fréquence variable ou accordable est particulièrement intéressante dans le cas où les spectres d'absorption du matériau sous-jacent à nettoyer et du matériau polluant recouvrant sa surface se recoupent ; il existe en effet, dans cette situation, un risque d'altération du matériau sous-jacent, ce qui pose des problèmes difficiles à résoudre, sauf à prévoir, conformément aux enseignements de la demande de brevet française FR-2 525 386 déjà mentionnée, des conditions de fonctionnement du laser susceptibles de fournir des impulsions produisant un effet thermique limité par leur profondeur de pénétration, lors de leur interaction avec la surface à décaper ou à décalaminer. En utilisant un laser accordable, il est toujours possible de trouver une plage de longueurs d'onde de travail échappant au spectre d'absorption du matériau sous-jacent, une longueur d'onde de cette plage servant, soit dès le début du traitement si elle est correctement absorbée par le matériau polluant, soit progressivement, ou complétement, au fur et à mesure que la couche polluée superficielle est volatilisée ; dans cette dernière configuration, un dispositif de contrôle adéquat, avec ou sans contre-réaction, permet cette évolution du faisceau laser en longueur d'onde.

Une mise en oeuvre particulière de cette utilisation d'un laser accordable pour réaliser le procédé conforme à la présente invention consiste à nettoyer des produits tubulaires dans un environnement industriel, soit lors de leur fabrication, soit dans le but de les décalaminer après usage. L'utilisation, dans ces cas spécifiques, d'un laser accordable n'est pas limitative, et on montré qu'un laser YAG fonctionnant en mode déclenché dans les conditions déjà mentionnées plus haut convenait également. En outre, l'utilisation des lasers à excimères qui émettent un rayonnement ultraviolet s'est avérée intéressante, notamment du fait de la structure généralement vitreuse du matériau polluant à éliminer de la surface des produits tubulaires, conformément à la description qui suivre.

Il s'agit ici de décaper, de dégraisser, ou plus généralement d'enlever les produits lubrifiants, tels du verre fusible ou de la graisse, se trouvant à l'intérieur et/ou à l'extérieur de produits tubulaires issus par exemple d'une filière, ou ayant été percés par un mandrin, puis expansés ou réduits par des moyens conventionnels connus. A leur sortie du dispositif de mise en forme, c'est-à-dire du dispositif de forgeage, les tubes ou produits tubulaires, sont ainsi très sales car leur réalisation met en oeuvre des lubrifiants, issus notamment de gargouzes placées en amont du dispositif de forgeage. Jusqu'à présent, il était connu de débarrasser les produits tubulaires de leur enduit lubrifiant par des moyens chimiques et/ou mécaniques du type d'un grenaillage interne et/ou externe ; une telle opération est nécessaire pour certains traitements ultérieurs spécifiques.

Conformément à la présente invention, on élimine la couche lubrifiante et la couche d'oxydes résiduelles présentes après le forgeage d'un produit tubulaire, issu par exemple d'une filière, au moyen d'un faisceau laser balayant au moins l'une de ses surfaces interne ou externe, le laser utilisé à cet effet ayant toutes les caractéristiques nécessaires à l'obtention, sur la surface de la matière solide sous-jacente, par exemple, quoique non exclusivement en acier, d'une onde de choc décollant lesdites couches, ledit laser étant par ailleurs du type accordable, ou non, quant à sa fréquence d'émission.

De la même façon, après installation en atmosphère industrielle d'un tube pollué par des dépôts, ou soumis à des conditions d'utilisation agressives, notamment dans des centrales thermiques, il est possible de décalaminer ce tube par le même procédé. La mise en oeuvre de l'invention nécessite en ce cas le transport du faisceau laser jusqu'à proximité de la zone d'interaction choisie, et on conçoit alors bien tout l'avantage procuré par le transport de ce faisceau au moyen d'au moins une fibre optique, suivant en cela les enseignements de la présente invention tels que décrits plus haut dans le texte. A ce titre, il convient de noter que l'utilisation d'un laser accordable peut considérablement simplifier la mise en oeuvre du procédé de nettoyage ; étant donné, en effet, qu'il est alors possible de réaliser une meilleure adéquation entre la longueur d'onde du laser utilisé et les spectres d'absorption respectifs du matériau sous-jacent à nettoyer, et du matériau polluant recouvrant sa surface, on peut faire fonctionner le laser à moindre énergie, ce qui facilite son transport par fibres optiques, voire permet de n'en utiliser qu'une seule, ou encore d'utiliser un type de fibre autre qu'une fibre avec gaine en silice, ou en silicone dur.

Il est bien entendu que toute réalisation, autre que celles décrites plus avant, du procédé de nettoyage ou du dispositif de mise en oeuvre du procédé de nettoyage selon l'invention, si elle est réalisée dans l'esprit de celle-ci, ne sortirait en aucun cas de son cadre.

Le domaine de l'invention est notamment celui de la restauration d'oeuvres d'art, qu'il s'agisse de monuments historiques, de mobiliers en bois, ou encore de verres ou de poteries, et également celui du nettoyage de tubes lors de leur fabrication, ou de leur décalaminage ultérieur.

## Revendications

1. Procédé de nettoyage de la surface de matériaux autres que du plastique, par lequel on focalise un faisceau laser impulsionnel de forte puissance instantanée sur ladite surface, caractérisé en ce que le laser utilisé à cet effet fournit des impulsions, dont la durée est comprise entre quelques nanosecondes et quelques microsecondes, dont la puissance instantanée a une valeur comprise entre quelques centaines de kilowatts et quelques dizaines de mégawatts et qui est focalisé sur la surface à nettoyer de manière à ce que la densité de puissance par impulsion soit comprise entre quelques centaines de kilowatts par cm² et quelques dizaines de mégawatts par cm², de manière à générer, à l'interface du matériau, une onde de choc non thermique ayant pour effet de décoller au moins une partie de la couche superficielle polluante recouvrant ledit matériau.

2. Procédé de nettoyage de la surface de matériaux suivant la revendication précédente, caractérisé en ce que la durée des impulsions est comprise entre quelques nanosecondes et 3 microsecondes.

3. Procédé de nettoyage de la surface de matériaux suivant l'une quelconque des revendications précédentes, caractérisé en ce que la longueur d'onde de la radiation émise par le laser utilisé à cet effet se situe à l'intérieur du spectre d'absorption du matériau polluant formant une couche superficielle sur la surface du matériau à nettoyer.

4. Procédé de nettoyage de la surface de matériaux suivant l'une quelconque des revendications précédentes, caractérisé en ce qu'on utilise un laser à fréquence d'émission variable ou accordable, dont la longueur d'onde d'émission peut être réglée continument ou discrètement au fur et à mesure du nettoyage, la plage de longueur d'onde requise à cet effet étant fonction, principalement, des spectres d'absorption respectifs du matériau sous-jacent à nettoyer et du matériau polluant recouvrant sa surface.

5. Procédé de nettoyage de la surface de matériaux suivant la revendication 4, caractérisé en ce qu'on utilise un laser à colorant.

6. Procédé de nettoyage de la surface de matériaux suivant la revendication 4, caractérisé en ce qu'on utilise un laser à milieu amplificateur solide à fréquence variable ou accordable, du type à saphir dopé au titane, ou du type à alexandrite.

7. Procédé de nettoyage de la surface de matériaux suivant l'une quelconque des revendications 1 ou 2, caractérisé en ce qu'on utilise un laser à milieu amplificateur solide du type cristal ou verre de grenat d'yttrium ou d'aluminium YAG dopé au néodyme, fonctionnant en mode déclenché, et fournissant des impulsions dont la durée peut varier entre une dizaine de nanosecondes et une trentaine de nanosecondes, l'énergie maximale par impulsion étant proche de 500 millijoules, et le diamètre du faisceau issu dudit laser ayant un diamètre inférieur à une dizaine de millimètres sur la surface à nettoyer.

8. Procédé de nettoyage de la surface de matériaux suivant l'une quelconque des revendications 1 ou 2, caractérisé en ce qu'on utilise un laser à excimères.

9. Procédé de nettoyage des surfaces interne et/ou externe d'un produit tubulaire, suivant la revendication 1, par lequel on élimine la couche lubrifiante et/ou la couche d'oxydes présentes sur lesdites surfaces, - résultant par exemple du forgeage d'un produit tubulaire, issu notamment d'une filière, ou encore de l'usage dudit produit tubulaire dans une atmosphère polluante -, au moyen d'un faisceau laser balayant au moins l'une desdites surfaces interne ou externe.

10. Dispositif de mise en oeuvre du procédé de nettoyage de la surface de matériaux selon l'une quelconque des revendications précédentes, caractérisé en ce qu'il comprend, d'une part, un ensemble mécanique (1) contenant le laser (2) et son alimentation électrique (3), d'autre part, un boîtier (4), placé sur le trajet du faisceau laser (5) issu dudit ensemble mécanique (1), et contenant un système optique destiné à séparer le faisceau laser (5) en plusieurs autres faisceaux laser (5a, 5b , 5c, 5d, 5e, 5f, 5g) d'énergies approximativement égales entre elles, lesdits faisceaux laser (5a, 5b, 5c, 5d, 5e, 5f, 5g) étant alors guidés, par un ensemble (6) de fibres optiques, vers une pièce à main (7) comprenant un moyen optique (8) de recombinaison des faisceaux laser (5a, 5b, 5c, 5d, 5e, 5f, 5g) en un faisceau laser unique (9), et un moyen optique de réglage (10) du diamètre (11) dudit faisceau laser (9) recombiné, ce deuxième moyen (10) étant par exemple constitué par un montage optique afocal (12), ladite pièce à main (7) ayant une taille adéquate pour être facilement manipulée par un opérateur procédant au nettoyage de la surface à nettoyer.

11. Dispositif de mise en oeuvre du procédé de nettoyage de la surface de matériaux selon la revendication 10, caractérisé en ce que les fibres optiques (6) utilisées pour guider les faisceaux laser (5a, 5b, 5c, 5d, 5e, 5f, 5g) vers la pièce à main (7) possèdent un coeur en silice et une gaine en silice ou en silicone dur.

12. Dispositif de mise en oeuvre du procédé de nettoyage de la surface de matériaux selon l'une quelconque des revendications 10 ou 11, caractérisé en ce qu'un dispositif effectuant un jet (14) d'un fluide, tel qu'avantageusement de l'air, est disposé à l'intérieur ou à l'extérieur de la pièce à main (7), procurant, de manière continue ou discontinue, un dépoussiérage de la face optique (71) de sortie de la pièce à main (7).

13. Dispositif de mise en oeuvre du procédé de nettoyage de la surface de matériaux selon l'une quelconque des revendications 10 à 12, caractérisé en ce que le boîtier (4) contenant le système optique de séparation du faisceau laser (5) en plusieurs faisceaux est un boîtier étanche dans lequel on réalise le vide, ce qui permet de protéger efficacement les optiques de la poussière et d'éviter les claquages résultant de la focalisation du faisceau laser (5) dans ledit boîtier (4).

## Claims

1. Process for cleaning the surface of materials other than plastic, whereby a pulsed laser beam of high instantaneous power is focussed on said surface, characterized in that the laser used to that end furnishes pulses, whose duration is included between some nanoseconds and some microseconds, whose instantaneous power has a value included between some hundreds of kilowatts and some tens of megawatts and which is focussed on the surface to be cleaned so that the density of power per pulse is included between some hundreds of kilowatts per cm² and some tens of megawatts per cm², so as to generate, at the interface of the material, a non-thermic shock wave having for its effect to detach at least a part of the, pollutant superficial layer covering said material.

2. Process for cleaning the surface of materials according to the preceding Claim, characterized in that the duration of the pulses is included between some nanoseconds and 3 microseconds.

3. Process for cleaning the surface of materials according to either one of the preceding Claims, characterized in that the wave length of the radiation emitted by the laser used to that end lies within the absorption spectrum of the pollutant material forming a superficial layer on the surface of the material to be cleaned.

4. Process for cleaning the surface of materials according to any one of the preceding Claims, characterized in that a laser with variable or tunable emission frequency is used, whose emission wave length may be continuously or discretely adjusted as cleaning progresses, the range of wave length required to that end being a function, principally, of the respective absorption spectra of the subjacent material to be cleaned and of the pollutant material covering its surface.

5. Process for cleaning the surface of materials according to Claim 4, characterized in that a dye laser is used.

6. Process for cleaning the surface of materials according to Claim 4, characterized in that a laser with solid amplifier medium, with variable or tunable frequency, is used, of the titanium-doped sapphire type or of the alexandrite type.

7. Process for cleaning the surface of materials according to either one of Claims 1 or 2, characterized in that a laser with solid amplifier medium of the crystal type or yttrium-aluminium-garnet (YAG) doped with neodymium, is used, functioning in Q-switch mode, and furnishing pulses whose duration may vary between about ten nanoseconds and about thirty nanoseconds, the maximum energy per pulse being close to 500 millijoules, and the diameter of the beam issuing from said laser having a diameter less than about ten millimeters on the surface to be cleaned.

8. Process for cleaning the surface of materials according to either one of Claims 1 to 2, characterized in that an excimer laser is used.

9. Process for cleaning the internal and/or external surfaces of a tubular product, according to Claim 1, whereby the lubricating layer and/or the layer of oxides present on said surfaces, - resulting for example from the forging of a tubular product, issuing in particular from a die, or from the use of said tubular product in a pollutant atmosphere -, is/are eliminated by means of a laser beam scanning at least one of said internal or external surfaces.

10. Device for carrying out the process for cleaning the surface of materials according to any one of the preceding Claims, characterized in that it comprises, on the one hand, a mechanical assembly (1) containing the laser (2) and its electrical supply (3), on the other hand, a box (4), placed on the path of the laser beam (5) issuing from said mechanical assembly (1), and containing an optical system intended to separate the laser beam (5) into a plurality of other laser beams (5a, 5b, 5c, 5d, 5e, 5f, 5g) whose energies are approximately equal to one another, said laser beams (5a, 5b, 5c, 5d, 5e, 5f, 5g) then being guided, by an assembly (6) of optical fibers, towards a hand piece (7) comprising an optical means (8) for recombining the laser beams (5a, 5b, 5c, 5d, 5e, 5f, 5g) into a single laser beam (9), and an optical means (10) for adjusting the diameter (11) of said recombined laser beam (9), this second means (10) being for example constituted by an afocal optical assembly (12), said hand piece (7) having an adequate size to be easily manipulated by an operator proceeding with cleaning the surface to be cleaned.

11. Device for carrying out the process for cleaning the surface of materials according to Claim 10, characterized in that the optical fibers (6) used for guiding the laser beams (5a, 5b, 5c, 5d, 5e, 5f, 5g) towards the hand piece (7) present a core of silica and a sheath of silica or hard silicone.

12. Device for carrying out the, process for cleaning the surface of materials according to either one of Claims 10 or 11, characterized in that a device effecting a jet (14) of a fluid such as, advantageously, air, is disposed inside or outside the hand piece (7), continuously or discontinuously removing dust frown the outlet optical face (71) of the hand piece (7).

13. Device for carrying out the process for cleaning the surface of materials according to any one of Claims 10 to 12, characterized in that the box (4) containing the optical system for separating the laser beam (5) into a plurality of beams is an airtight box in which a vacuum is created, this making it possible effectively to protect the optics from dust and to avoid the breakdowns resulting from the laser beam (5) focussing in said box (4).

## Patentansprüche

1. Verfahren zur Reinigung der Oberfläche von Materialien, außer Kunststoffen, bei welchem ein Strahl eines Impulslasers mit hoher Momentanleistung auf diese Oberfläche gerichtet wird, **dadurch gekennzeichnet, daß** der zu diesem Zweck verwendete Laser Impulse liefert deren Dauer im Bereich von einigen Nanosekunden und einigen Mikrosekunden, und deren Momentanleistung im Bereich von einigen Hundert Kilowatt und einer zweistelligen Megawattzahl liegt, und der derart auf die zu reinigende Oberfläche ausgerichtet ist, daß die Impulsleistungsdichte zwischen einigen Hundert Kilowatt pro cm² und einer zweistelligen Megawattzahl pro cm² liegt, daß an der Grenzfläche des Materials eine nicht-thermische Schockwelle erzeugt wird, welche eine Ablösung zumindest eines Teils der das Material bedeckenden Schmutzoberflächenschicht bewirkt.

2. Verfahren zur Reinigung der Oberfläche von Materialien nach dem vorhergehenden Anspruch, **dadurch gekennzeichnet, daß** die Impulsdauer zwischen einigen Nanosekunden und 3 Mikrosekunden liegt.

3. Verfahren zur Reinigung der Oberfläche von Materialien nach einem der vorhergehenden Ansprüche, **dadurch gekennzeichnet, daß** die Wellenlänge der Strahlung, welche von dem zu diesem Zweck verwendeten Laser abgestrahlt wird, innerhalb des Absorpitonsspektrums des Materials liegt, das die Schmutzoberflächenschicht auf der Oberfläche des zu reinigenden Materials bildet.

4. Verfahren zur Reinigung der Oberfläche von Materialien nach einem der vorhergehenden Ansprüche, **dadurch gekennzeichnet, daß** ein Laser mit verstellbarer oder abstimmbarer Abstrahlungsfrequenz verwendet wird, bei dem die Wellenlänge stufenlos oder gestuft mit Fortschreiten der Reinigung eingestellt werden kann, wobei der dafür erforderliche Wellenlängenbereich hauptsächlich von den Absorptionsspektren des zu reinigenden, darunterliegenden Materials bzw. des verschmutzenden Materials, mit dem dessen Oberfläche überzogen ist, abhängt.

5. Verfahren zur Reinigung der Oberfläche von Materialien nach Anspruch 4, **dadurch gekennzeichnet, daß** ein Farblaser verwendet wird.

6. Verfahren zur Reinigung der Oberfläche von Materialien nach Anspruch 4, **dadurch gekennzeichnet, daß** ein Laser, dessen verstärkendes Medium ein Feststoff ist und dessen Frequenz einstellbar oder abstimmbar ist, und zwar vom Typ titandotierter Saphir, oder vom Alexandrittyp, verwendet wird.

7. Verfahren zur Reinigung der Oberfläche von Materialien nach einem der Ansprüche 1 oder 2, **dadurch gekennzeichnet, daß** ein Laser, dessen verstärkendes Medium ein Feststoffist, und zwar vom Typ Yttriumgranat-Kristall oder -Glas oder vom Neodym-YAG Aluminiumtyp, verwendet wird, der im Impulsmodus betrieben wird und Impulse liefert, deren Dauer etwa im Bereich von 10 bis 30 Nanosekunden liegt, wobei die maximale Energie pro Impuls bei etwa 500 Millijoules liegt und der Durchmesser des vom Laser abgegebenen Strahls auf der zu reinigenden Oberfläche innerhalb einer zweistelligen Millimeterzahl liegt.

8. Verfahren zur Reinigung der Oberfläche von Materialien nach einem der Ansprüche 1 oder 2, **dadurch gekennzeichnet, daß** ein Excimerlaser verwendet wird.

9. Verfahren nach Anspruch 1 zur Reinigung der inneren und/ oder äußeren Oberflächen eines rohrförmigen Erzeugnisses, durch das die auf diesen Oberflächen vorhandene Schmiermittelschicht und/ oder Oxidschicht, die beispielsweise beim Warmumformen eines rohrförmigen Produktes, welches insbesondere mit einer Profilformpresse hergestellt wurde, oder auch bei Verwendung des rohrförmigen Produktes in einer verschmutzenden Atmosphäre entsteht, mittels eines Laserstrahls entfernt wird, wobei von der inneren und der äußeren Oberfläche wenigstens eine von beiden von diesem Strahl abgetastet wird.

10. Vorrichtung zur Durchführung des Reinigungsverfahrens der Oberfläche von Materialien nach einem der vorhergehenden Ansprüche, **dadurch gekennzeichnet, daß** sie einerseits eine mechanische Anordnung (1), welche den Laser (2) und dessen Stromversorgungseinheit (3) enthält, und andrerseits ein Gehäuse (4) aufweist, das sich im Übertragungsweg des von dieser mechanischen Anordnung (1) abgegebenen Laserstrahls (5) befindet und das ein optisches System zur Trennung des Laserstrahls (5) in mehrere weitere Laserstrahlen (5a, 5b, 5c, 5d, 5e, 5f, 5g) von jeweils ungefähr gleicher Energie enthält, wobei diese Laserstrahlen (5a, 5b, 5c, 5d, 5e, 5f, 5g) dann durch einen Satz von optischen Fasern (6) zu einem Handhabungsstück (7) geleitet werden, welches eine optische Einrichtung (8) zur Rekombination der Laserstrahlen (5a, 5b, 5c, 5d, 5e, 5f, 5g) zu einem einzigen Laserstrahl (9) sowie eine optische Einrichtung (10) zur Einstellung des Durchmessers (11) des rekombinierten Laserstrahls (9) aufweist, wobei diese zweite Einrichtung (10) beispielsweise aus einem optischen Aufbau (12) mit Brennpunkt im Unendlichen besteht und die Größe des Handstück (7) eine einfache Handhabung durch den die Reinigung der Oberfläche durchführenden Bediener erlaubt.

11. Vorrichtung zur Durchführung des Reinigungsverfahrens der Oberfläche von Materialien nach Anspruch 10, **dadurch gekennzeichnet, daß** die optischen Fasern (6), welche verwendet werden, um die Laserstrahlen (5a, 5b, 5c, 5d, 5e, 5f, 5g) zum Handstück (7) zu leiten, einen Quarzglaskern und eine Hülle aus Quarzglas oder aus hartem Silikon besitzen.

12. Vorrichtung zur Durchführung des Reinigungsverfahrens der Oberfläche von Materialien nach einem der Ansprüche 10 oder 11, **dadurch gekennzeichnet, daß** eine Vorrichtung zur Erzeugung eines Fluidstrahls (14), beispielsweise vorteilhaft eines Luftstrahls, innerhalb oder außerhalb des Handstücks (7) angeordnet ist und in kontinuierlicher oder unterbrochener Weise eine Entstaubung der optischen Austrittsfläche (71) des Handstücks (7) bewirkt.

13. Vorrichtung zur Durchführung des Reinigungsverfahrens der Oberfläche von Materialien nach einem der Ansprüche 10 bis 12, **dadurch gekennzeichnet, daß** das Gehäuse (4), welches das optische System zur Trennung des Laserstrahls (5) in mehrere Strahlen enthält, abgedichtet und evakuiert ist, wodurch die optischen Bauteile wirksam vor Staub geschützt werden können und ein durch die Fokussierung des Laserstrahls (5) im Gehäuse (4) bedingtes Durchschlagen vermieden werden kann.
